# EUROPÄISCHE PATENTANMELDUNG

(11) **EP 0 762 420 A2**
(43) Veröffentlichungstag der Anmeldung: **12.03.1997**
(21) Anmeldenummer: 96112181.1
(22) Anmeldetag: 27.07.1996
(51) Int. Cl.: G11B 23/40, G11B 17/02, G11B 23/00

(54) **Klemmgerät zum Eindrucken von scheibenförmigen Informationsmedien**

(30) Priorität: 31.08.1995 DE 19532110
(71) Anmelder: EASTMAN KODAK COMPANY (a New Jersey corporation), Rochester, New York 14650 (US); KODAK AKTIENGESELLSCHAFT, D-70323 Stuttgart (DE)
(72) Erfinder: Freund, Michael, 70323 Stuttgart (DE)
(74) Vertreter: Blickle, K. Werner, Dipl.-Ing.

(57) **Abstract**

The clamping apparatus for imprinting disk-shaped information media (14) consists of a base plate (2) with a central centering aid (8) for the information medium (14) and a cover (4) with an annular opening. The base plate (2) is joined pivotably to the cover by means of a hinge (10). A closure mechanism (12) is provided diametrically opposite the hinge (10), and elastic elements (30, 31), on which the information medium (14) rests and which when the cover is closed can be compressed by the information medium (14), are mounted on the base plate (2).

## Beschreibung

The invention relates to a clamping apparatus for imprinting disk-shaped information media.

Label information or other decorative patterns are applied onto disk-shaped information media. The labels or patterns can involve both text and graphics. The label information provides the user with, for example, information about the content of the information medium. Optical disks, called CDs, bear the label information on one side of the information medium. The label information can be applied with conventional printing processes. Inkjet printing is a preferred printing process for disk-shaped information media, since with this the labels can be individually configured in terms of both graphics and information content.

A method for imprinting plate-shaped information media is disclosed in German Application DE-A-37 21 651. In a first embodiment, the information medium is applied on the rotation axis of a drive means, and caused to rotate. The printing head of an inkjet printer moves radially over the surface to be imprinted. In a second embodiment, the information medium is laid on two parallel transport belts which impart a linear motion to the information medium. The inkjet printing head moves perpendicular to the linear motion of the transport belts. European Patent Application EP-A-0 628 956 discloses an optical information medium and a method for its manufacture.

A protective layer covered by a hydrophilic film is provided on the disk. This film can easily be imprinted with an inkjet printer which uses water-based inks. For this purpose, the disk is laid in a rectangular holder which has an opening that is somewhat larger than the diameter of the disk. The disk itself lies on a step of the holder in such a way that the surface to be imprinted faces toward the inkjet printing head. The holder is moved by means of a transport table in the printing apparatus.

German Application DE-A-23 04 723 discloses a method and a device for producing disk-shaped information media. The printing units are arranged in planes located one above the other, and the information media are moved past the individual printing stations by means of an endless transport belt. The individual holders of the transport belt for receiving the information media are made of light alloy, and are somewhat larger in diameter than the information media.

With the holders described above for imprinting information media it is not possible to meet the requirement that the surface of the information medium be at a constant distance from the printing head of the printing apparatus. Thickness fluctuations or warpage of the information media lead to defective or unsatisfactory printing.

It is the object of the invention to create a clamping apparatus for imprinting disk-shaped information media with which a constant distance between the surface of the information medium and the printing head can be achieved.

According to the invention, this object is attained in that a base plate with a central centering aid for the information medium is provided as well as a cover with an annular opening that is joined pivotably by means of a hinge to the base plate, that a closure mechanism is provided diametrically opposite the hinge and that elastic elements, on which the information medium rests and which when the cover is closed can be compressed by the information medium, are mounted on the base plate.

The advantage of the apparatus according to the invention is that the surface of the information medium to be imprinted is at a constant distance from the printing head of the printing apparatus. The information medium is laid on the base plate of the clamping apparatus and aligned, by means of a slider and the centering aid provided thereon, concentrically with respect to a central countersunk recess in the base plate. The cover is pivotably joined to the base plate by means of a hinge. Provided diametrically opposite the hinge is a closure mechanism which holds the cover in the closed position. Elastic elements on which the information medium rests are applied on the base plate. When the cover is closed, the overhang of the cover and the slider overhang press the information medium against the elastic elements. This ensures that the surface of the information medium is always at the same distance from the printing head in the printing device.

Further advantageous configurations of the invention are evident from the subclaims.

The subject matter of the invention will be described with reference to the embodiments depicted in the drawing, in which:
- Fig. 1: shows the clamping apparatus according to the invention in a perspective view;
- Fig. 2: shows the clamping apparatus according to the invention in an exploded view; and
- Fig. 3: shows a cross section through the clamping apparatus of Fig. 2 along line A-A, with the information medium in place.

The following description is limited to optical information media (CDs) which are to be imprinted on the surface which bears no information. For a person skilled in this art it is self-evident that other information media can also be imprinted with the apparatus according to the invention.

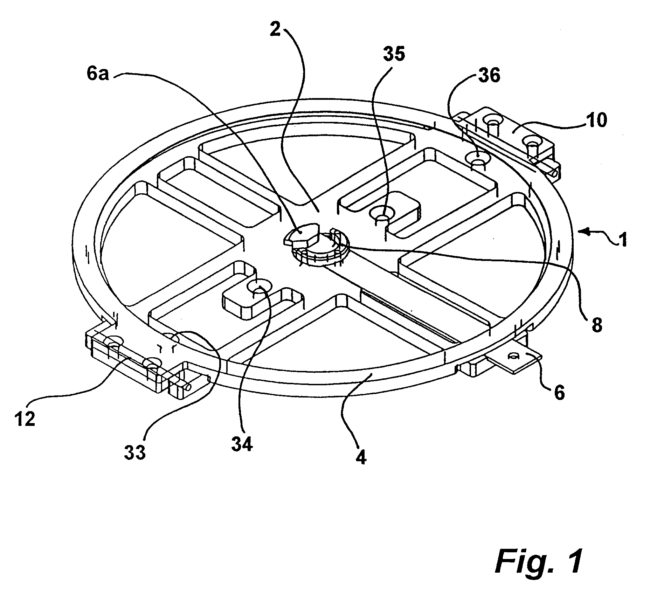

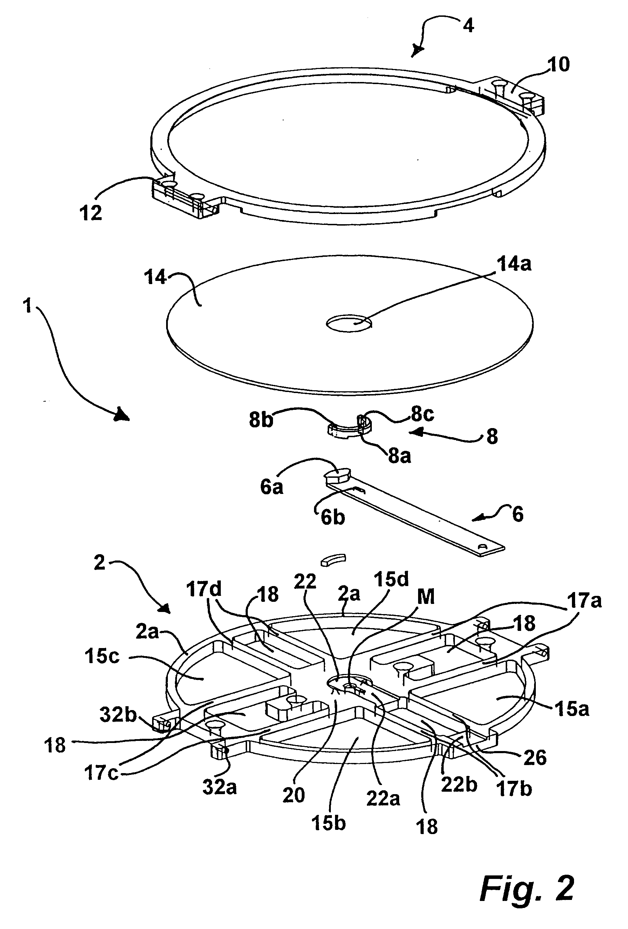

A clamping apparatus 1 according to the invention is depicted in Figure 1 in a perspective top view. For reasons of clarity, an optical information medium laid in the clamping apparatus is not shown. Clamping apparatus 1 is constructed of a base plate 2, a cover 4, and a slider 6 with centering aid 8. Base plate 2 consists substantially of a lightweight material (e.g. aluminum). The tolerance of the base plate is not critical. Cover 4, on the other hand is constructed of a low-distortion material (e.g. Rynite steel), and has an annular opening which has a somewhat smaller diameter compared to information medium 14 to be imprinted. Centering aid 8 is used to position optical information medium 14 concentrically on the base plate with respect to a central hole 14a (see Fig. 2). Base plate 2 and cover 4 are pivotably joined together by a hinge 10. Provided diametrically opposite hinge 10 is a closure mechanism 12 which completes the clamping process after cover 4 is closed.

The exploded view in Fig. 2 makes more clearly evident the construction and function of the clamping apparatus. Base plate 2 is substantially circular and possesses a somewhat greater diameter than the diameter of optical information medium 14. Base plate 2 can consist of a solid plate. For reasons of weight saving, however, it is recommended to provide openings in base plate 2. In the embodiment depicted in Figure 2, four openings 15a, 15b, 15c, and 15d, which have the shape of a circle segment of approximately 90 degrees, are formed into the base plate 2. The circle segments are separated from one another by webs 17a, 17b, 17c, and 17d, the center of which has a substantially rectangular opening 18. The openings are arranged in base plate 2 so as to form a central, solid, substantially rectangular plate 20. Plate 20 possesses a circular countersunk recess 22, coaxial with center point M of base plate 2, which continues into web 17b as a countersunk recess 22a with two parallel sides. Web 17b extends out, beyond the periphery of base plate 2 delimited by a solid circular ring 24, as an extension 26. Extension 26 has a countersunk recess 22b which is aligned with respect to countersunk recess 22a and also has the same width. Shaped onto webs 17a and 17c, which run perpendicular to web 17b, are C-shaped extensions 28 and 30, the arms of which extend out beyond the periphery of base plate 2. Note that elements 15a, 15b, 15c, and 15d, 17a, 17b, 17c, and 17d, and 18 can be shaped in any way, provided they allow a rigid, flat support surface for the information medium.

Slider 6, which has a slider overhang 6a at one end, is guided in countersunk recesses 22a and 22b. Centering aid 8 is placed on slider 6. An oblong hole 6b, which coincides with a corresponding dowel pin (not shown) in the base plate when slider 6 is inserted, is provided for this purpose in slider 6. The centering aid has a hole 8a which serves to receive a dowel pin that is guided through hole 8a of the base plate and through oblong hole 6b of slider 6. Centering aid 8 is semicircular in shape, such that the radius of centering aid 8 corresponds to the radius of central hole 14a in the optical information medium. The diameter of centering aid 8 is greater than the width of slider 6. To ensure sufficiently stable seating of centering aid 8, a countersunk recess 8d of the same width as slider 6 is shaped into the centering aid. Centering aid 8 is applied symmetrically with respect to the longitudinal axis of slider 6, and two further holes 8b and 8c are provided in the centering aid in such a way that they receive, on the left and right sides of slider 6, screws (not ahown) that are used to adjust the height of slider overhang 6a.

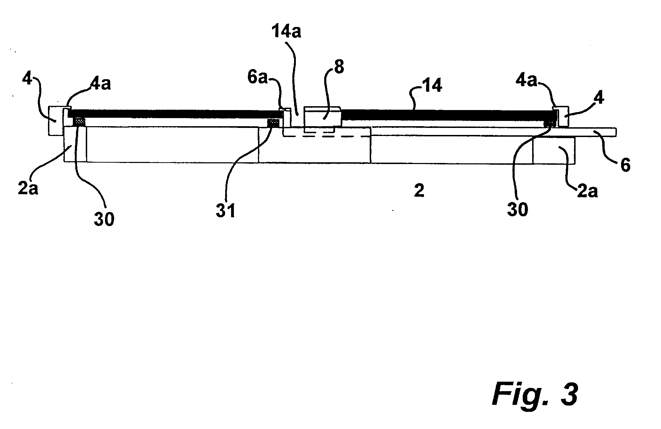

A cross-section through the clamping apparatus according to the invention, with information medium 14 in place, is showm in Fig. 3. An elastic element 30 is provided on base plate 20, radially on rim 2a of base plate 2. The elastic element is applied in such a way that it is at a radial distance from center point M of base plate 2 which is less than the radius of the information medium 14 to be imprinted. A further elastic element 21 is applied around circular countersunk recess 22, although the region in which slider 6 is guided is not provided with the elastic element 31. The radial distance between elastic element 31 and center point M of base plate 2 is somewhat greater than the radius of the central hole 14a of the information medium 14. The result, as depicted for example in Fig. 3, is that information medium 14, inserted and aligned in the clamping apparatus, rests on the two elastic elements 30 and 31. As is evident from Fig. 3, cover 4 possesses a radially peripheral cover overhang 4a which, then cover 4 is closed, comes into contact with the information medium 14. Slider overhang 6a provided on slider 6 lies at the same height as cover overhang 4a. As already mentioned earlier, height adjustment is achieved by screws provided on centering aid 8. Slider 6 is held by a wire spring (not shown) in the position which immobilizes the information medium 14. It is self-evident that elastic elements 30 and 31 can be present in the form of many individual elements that are provided, in accordance with the description above, uniformly and radially on base plate 2. Elastic elements 31 are preferably distributed as small individual elements over the entire rim region of the information medium, so that when cover 4 is closed, uniform pressure on the information medium by cover overhang 4a can be achieved.

Clamping of the information medium can be achieved, for example, by the fact that after cover 4 is closed, a pin (not shown) is introduced into holes 32a and 32b of closure mechanism 12. The closure mechanism can operate according to various principles known from the prior art, for example a snap mechanism, movable mandrel or bolt, etc. Clamping and immobilization of the information medium 14 are achieved by the fact that when cover 4 is closed, the optical information medium 14 is pressed by overhang 4a of cover 4 and slider overhang 6a against elastic elements 30 and 31, respectively. The overhangs described are a maximum of 0.3 millimeters thick. As a result, distortions within information medium 14 are eliminated by pressure, and the thickness deviation is compensated for by elastic elements 30 and 31. Elastic elements 30 and 31 preferably consist of an elastic rubber coating.

The clamping apparatus according to the invention can also be applied onto a slide (not shown) which moves the clamping apparatus together with information medium 14. Holes 33, 34, 35, and 36, by means of which the entire clamping apparatus can be positively bolted onto the slide, are provided for this purpose in base plate 2.

When the clamping apparatus according to the invention is used in a printer, slider 6 must terminate flush with the outer rim of the clamping apparatus in order to allow utilization. It is also advantageous if the outer rim of the clamping apparatus is of rectangular configuration. The outside dimensions, configuration, or thickness of the information medium 14 to be clamped are implemented in accordance with requirements, so that a high level of compatibility with the various printers for information media can be achieved.

## Claims

1. Clamping apparatus for imprinting disk-shaped information media (14), **characterized in that** a base plate (2) with a central centering aid (8) for the information medium (14) is provided as well as a cover (4) with an annular opening that is joined pivotably by means of a hinge (10) to the base plate (2), that a closure mechanism (12) is provided diametrically opposite the hinge (10), and that elastic elements (30, 31) are mounted on the base plate, on which the information medium (14) rests and which when the cover is closed are compressed by the information medium (14).

2. Clamping apparatus according to Claim 1, characterized in that the cover (4) possesses a radial overhang (4a) which defines the annular opening in the cover (4), the diameter of the opening being somewhat smaller than the diameter of the information medium (14) to be imprinted.

3. Clamping apparatus according to Claims 1 and 2, characterized in that a slider (6) is provided in the base plate (2) in a substantially rectangular countersunk recess, the centering aid (8) guiding slider (6); and that provided at its end is a slider overhang (6a) which is adjusted to the same height with respect to the overhang (4a).

4. Clamping apparatus according to Claim 3, characterized in that sufficient guidance of the slider can be achieved by means of a countersunk recess (8d) of the width of the slider (6) on the centering aid; and that the centering aid (8) is applied symmetrically with respect to the longitudinal axis of the slider (6); and that two further holes (8b) and (8c) are provided in the centering aid (8) in such a way that they receive, on the left and right sides of the slider (6), screws by means of which the slider overhang (6a) is adjustable as to height.

5. Clamping apparatus according to Claim 1, characterized in that the base plate (2) is manufactured from a lightweight material.

6. Clamping apparatus according to Claim 4, characterized in that the base plate is made of aluminum.

7. Clamping apparatus according to Claim 1, characterized in that the cover (4) is manufactured from a low-distortion material.

8. Clamping apparatus according to Claim 7, characterized that the cover (4) is made of Rynite steel.

9. Clamping apparatus according to Claim 1, characterized in that the elastic elements (30, 31) are made of an elastically deformable rubber; that the elastic element (30) is applied in a ring shape onto the base plate (2), the diameter of the ring being somewhat less than the diameter of the information medium (14) to be imprinted; and that the elastic element (31) is applied radially around a central circular countersunk recess (22) in the central base plate (2), the diameter of the radially applied element (31) being somewhat greater than the diameter of a central opening (14a) of the information medium (14).

10. Clamping apparatus according to Claim 9, characterized in that the elastic elements (30, 31) are provided on the base plate (2) as a plurality of pillow-shaped individual elements, which are distributed uniformly with respect to the diameter and the circular countersunk recess (22) of the information medium (14).

11. Clamping apparatus according to Claims 2 and 3, characterized in that the overhang (4a) of the cover (4) and the slider overhang (6a) possess a maximum thickness of 0.3 millimeters.
